(19) Europäisches Patentamt
European Patent Office
Office européen des brevets

(11) **EP 1 944 974 A1**

(12) **EUROPEAN PATENT APPLICATION**

(43) Date of publication:
**16.07.2008  Bulletin 2008/29**

(51) Int Cl.:
***H04N 7/26*** *(2006.01)*

(21) Application number: **07000368.6**

(22) Date of filing: **09.01.2007**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK RS**

(71) Applicant: **MATSUSHITA ELECTRIC INDUSTRIAL CO., LTD.**
**Osaka 571-8501 (JP)**

(72) Inventors:
• **Wittmann, Steffen**
  **63225 Langen (DE)**
• **Wedi, Thomas**
  **63225 Langen (DE)**

(74) Representative: **Grünecker, Kinkeldey, Stockmair & Schwanhäusser Anwaltssozietät Leopoldstrasse 4 80802 München (DE)**

(54) **Position dependent post-filter hints**

(57)    The present invention determines different additional a priori information for setting up an image filter depending on the spatial position of an image element within an image. The individual image elements of an image are assigned to one of a plurality of groups and an image filter is set up separately for each group of pixels based on additional a priori information. As the original image data is not available in a decoder, a conventional decoder can only use decoded image data for determining adaptive filter coefficients. However, this decoded image data includes disturbances, such as quantisation noise. The present invention generates additional data for improving the filter efficiency based on undisturbed image data. This additional data for setting up an image filter is determined depending on the spatial position of the pixels within an image. An image is separated into a plurality of groups and separate filter data is determined for each group. The decoder analyses the filter information and determines an adaptive set of filter coefficients for each group of image elements separately. Based on a determined filter coefficient, an adaptive filtering of the decoded image data is performed depending on the spatial positions of the individual image elements. In this way, the decoder applies an improved filtering.

Fig. 3

EP 1 944 974 A1

**Description**

The present invention relates to the encoding and decoding of motion picture video data. Particularly, the present invention relates to a method and an apparatus for encoding and decoding video data, including an adaptive filtering of the image data.

Motion pictures are being adopted in increasing numbers of applications, ranging from video-telephoning and video-conferencing to digital television and DVD. When a motion picture is being transmitted or recorded, a substantial amount of data has to be sent through conventional transmission channels of limited available frequency bandwidth or has to be stored on conventional storage media of limited data capacity. In order to transmit and store digital data on conventional channels/ media, it is inevitable to compress or reduce the volume of digital data.

For the compression of video data, a plurality of video encoding standards has been developed. Such video standards are, for instance, ITU-T standards denoted with H.26x and ISO/IEC standards denoted with MPEG-x. The most up-to-date and advanced video encoding standards are currently the standards denoted as H.264 AVC or MPEG-4 / AVC.

The encoding approach underlying most of these standards consists of the following main stages:

(i) Dividing each individual frame into blocks of pixels in order to subject each video frame to data compression at a block level.

(ii) Reducing spatial redundancies within a video frame by applying each block of video data to a transform from the spatial domain into the frequency domain.

(iii) Quantizing the resulting transform coefficients. In this way, the data volume of the encoded image data is reduced.

(iv) Entropy encoding the quantized transform coefficients.

The original transform coefficient values cannot be recovered from the quantized transform coefficients due to a data loss introduced by said quantizing operation. The resulting image quality is impaired by a corresponding quantizing noise

In order to further minimize the data volume of the encoded image data, an optional fifth stage can be added to the above coding approach:

(v) Exploiting temporal dependencies between blocks of subsequent frames in order to only transmit changes between subsequent frames. This is accomplished by employing a motion estimation/compensation technique.

Among the various video compression techniques, the so-called hybrid coding technique is known to be the most effective. The hybrid coding technique combines temporal and spatial compression techniques together with statistical coding. Most hybrid techniques employ motion-compensated Differential Pulse Code Modulation (DPCM), two-dimensional Discrete Cosine Transform (DCT), quantization of DCT coefficients, and a Variable Length Coding (VLC).

The motion compensated DPCM is a process of determining the movement of an image object between a current frame and a previous frame, and predicting the current frame according to the determined motion to produce differential signals representing the differences between the current frame and its prediction.

During the encoding and decoding on the image data, several disturbances are added to the image. For example, a quantization noise is added when the DCT coefficients are quantized. Further, blocking effects will occur when the image is separated into a plurality of image blocks and each block is encoded separately.

In order to improve the image quality of the decoded image data, the decoded image data is filtered. For example, blocking effects are reduced by smoothing the pixels at the border of each block. For this purpose, a linear filtering is applied to the relating pixel values at the block borders. In this way, the subjective image quality may be improved.

However, such a filter only addresses to some particular pixels at the border of an image block. There is no filtering applied to the inner pixel values of a block. For example, the filtering is performed by employing a linear filter having predetermined filter coefficients. Hence, the filter does not consider the content of the current image. In particular, the filter does not consider whether the image contains sharp details or only a smooth area.

In order to further improve the image quality, an adaptive filtering may be applied, for instance, by analyzing the content of the images. For example, the content of the currently and/or previously encoded image data is analyzed and the filter parameters are adapted depending on the analyzed image data. In this way, a further improvement of the subjective image quality is achieved.

A conventional adaptive filter determines the filter parameters depending on disturbed image data of currently or previously decoded images. Although, a user may consider the filtered image data as a subjective "better" image, there is still an unknown difference between a filtered image and the undisturbed "true" image.

US-A-2005/0105 627 (Z. Sun et al., Eastman Kodak Company) describes an adaptive filtering of a video sequence. In order to adapt the filter to the current image data, motion and noise of the current decoded image data is estimated. Based on the estimated motion and noise, an iterative determination of filter parameters is carried out.

However, the improvement of the image quality by an adaptive filtering is limited. A further enhancement of the image quality is only achieved by increasing the data rate of the encoded image data. Thus, the image quality is limited by the storage capacity of a recording medium or the bandwidth of a transmission line.

The present invention aims to enhance the image quality of decoded image data.

This is achieved by the features of the independent claims.

According to a first aspect of the present invention, an image encoder for encoding a sequence of images is provided. The encoder includes an image encoding unit, and a filter data generator. The encoding unit encodes image data including a plurality of image elements. The filter data generator determines filter data for a plurality of image element group separately, wherein the filter data is determined based on the image data to be encoded. The determined filter data is to be inserted into the encoded image data.

According to a second aspect of the present invention, a method for encoding the sequence of images is provided. Image data including a plurality of image elements is encoded. An image element included in the image data is assigned to one of a plurality of image element groups. Filter data is determined for each image element groups separately, wherein the filter data is determined based on the image data to be encoded. The determined filter data is inserted into the encoded image data.

According to a further aspect of the present invention, an image decoder for decoding a sequence of encoded image data is provided. The decoder includes a decoding unit, a filter data extracting unit, and a filter. The decoding unit decodes encoded image data, wherein the image data includes a plurality of image elements. The filter data extracting unit extracts filter data from the encoded image data. The filter filters the decoded image data based on the corresponding extracted filter data separately for a plurality of image element groups.

According to still another aspect of the present invention, a method for decoding a sequence of coded image data is provided. Encoded image data is decoded, wherein the decoded image data includes a plurality of image elements. Filter data is extracted from the encoded image data. The decoded image data of each image element group is filtered based on the corresponding extracted filter data separately for a plurality of image element groups.

It is the particular approach of the present invention to determine different settings of an adaptive filter depending on the spatial position of a pixel within an image. Each pixel of an image is assigned to one of a plurality of groups, and separate filter parameter are determined for an optimal filtering of the respective group of image elements. The individual filter data is generated based on a priori information, in particular based on uncorrupted image data.

As the uncorrupted image data is not available in a decoder, the assignment of the pixels to the individual groups and the generation of the filter data is carried out by an encoder during encoding the image data. The additional filter information is added to the corresponding encoded image data and provided to the decoder. The decoder analyses the provided information, sets up the filter in accordance with the received filter data, and filters each groups of pixels separately based on the respective filter data. In this way, the image quality of the filtered image data is improved. As the pixels of a whole image are separated into a plurality of groups, an enhanced filtering of the individual pixel groups is achieved in the decoder.

Preferably, the image encoder further includes a decoding unit for decoding the encoded image data. The filter data of an image element group is determined based on the image data to be encoded and the corresponding decoded image data. In this way, it is possible to determine the differences between the decoded image data and the corresponding uncorrupted image data. Based on this difference, an indication is given to the decoder for minimizing the differences between decoded image data and uncorrupted image data. Preferably, a cross-correlation is calculated between the image data to be encoded and the corresponding decoded image data of an image element group. Accordingly, a receiver can determine an optimal set of filter coefficients by calculating an auto-correlation function of the decoded image data and determining a filter coefficient based on the extracted cross-correlation and the computed auto-correlation. Such a filter can be realized, for example, by a Wiener filter.

Preferably, the individual image elements are assigned to the plurality of image element groups based on a predetermined rule. In this way, a quick and easy assignment of the image elements to one of the image element groups can be achieved.

According to another aspect of the present invention, each image is divided into a plurality of blocks which are individually encoded, and an image element is assigned to the plurality of image element groups depending on the spatial position of the image element within a block. Preferably, a same rule for assigning an image element to an image element group depending on the spatial position of an image element within a block is applied for all blocks of an image. By performing a block-based assignment, the division of the image elements to one of the individual groups can be further simplified.

According to another preferred embodiment, the image elements are assigned to the plurality of image element groups according to an adaptive assignment rule. Preferably, a separate assignment rule is determined for each image. In this way, a very precise assignment of the individual pixels to one of the groups can be achieved.

Alternatively, a same assignment rule is applied for a plurality of successive images. In this manner, the amount of additional data indicating the assignment of the pixels to the individual groups can be reduced.

Preferably, an indication of the assignment of the image elements to the individual groups is inserted into the encoded image data. Specifically, the indication of the assignment of the image elements to the individual groups is inserted into the encoded data as an information unit separate from the encoded image data. For example, the separate information unit is a Supplemental Enhancement Information message. Accordingly, a decoder can analyse this indication a assign the individual pixels to the plurality of image element groups accordingly. As the additional information indicating an image element assignment and filter data is provided separate from the encoded image data, a decoder can discard the additional information if the decoder cannot employ a filtering based on the additional data.

Preferably, an image encoding and decoding system includes an image encoder and an image decoder.

The above and other objects and features of the present invention will become more apparent from the following description of the embodiments, in which:

Fig.1 1 schematically illustrates a block diagram form the configuration of a conventional hybrid video encoder;

Fig. 2 schematically illustrates a block diagram form the configuration of a convention hybrid video decoder;

Fig. 3 schematically illustrates in a block diagram form the configuration of a video encoder with a filter data generation in accordance with the present invention;

Fig. 4 schematically illustrates in a block diagram form the configuration of a video encoder including an additional decoding unit;

Fig. 5 schematically illustrates in a block diagram form the configuration of a video decoder with an enhanced filter parameter determination in accordance with the present invention;

Fig. 6 schematically illustrates in a block diagram form the configuration of hybrid video encoder employing a filter data generation;

Fig. 7 schematically illustrates in a block diagram form the configuration of a hybrid video decoder including an additional filter parameter determination according to the present invention; and

Fig. 8 schematically illustrates how to assign different filter operations depending on the position of the individual pixels.

The present invention relates to an improved adaptive filtering of disturbed image data, specifically to a filtering of image data disturbed during an encoding and subsequent decoding process. Modern image recording / transmitting systems aim to reduce the data volume by compressing the image data. For this purpose, an encoder is compressing the image data before recording or transmitting and a decoder is uncompressing the compressed data for a reproduction.

Although it is possible to implement the present invention in an hybrid video encoder, the present invention is not limited to a video encoder employing image prediction. Rather, the present invention can be also realized by any other image encoding device.

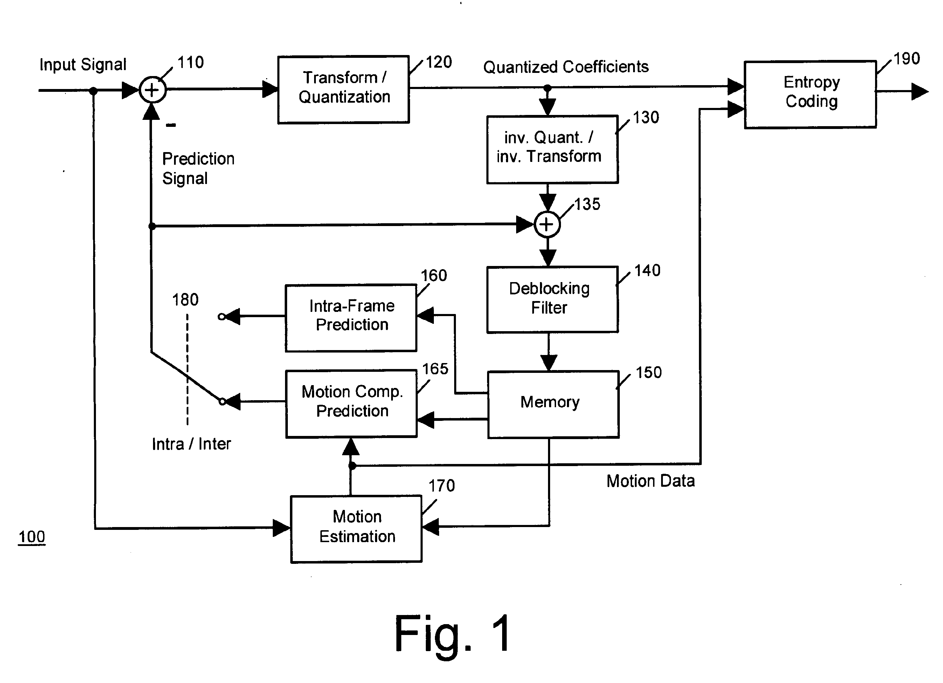

Referring to Fig. 1, an example of a hybrid video encoder is illustrated. The video encoder, generally denoted by reference numeral 100, comprises a subtractor 110 for determining differences between a current video image (input signal) and a prediction signal of the current image which is based on previously encoded images. A transform and quantization unit 120 transforms the resulting prediction error from the spatial domain to the frequency domain and quantizes the obtained transform coefficients. An entropy coding unit 190 entropy encodes the quantized transform coefficients.

The operation of the video encoder of Fig. 1 is as follows. The encoder employs a Differential Pulse Code Modulation (DPCM) approach which only transmits differences between the subsequent images of an input video sequence. These differences are determined in subtractor 110 which receives the video images to be encoded in order to subtract a prediction of the current images therefrom.

The prediction is based on the decoding result ("the locally decoded image") of previously encoded images on the encoder side. This is accomplished by a decoding unit incorporated into video encoder 100. The decoding unit performs the encoding steps in reverse manner. An inverse quantization and inverse transform unit 130 de-quantizes the quantized coefficients and applies an inverse transform to the de-quantized coefficients. In adder 135, the decoded differences are added to the prediction signal.

The motion compensated DPCM, conducted by the video encoder of Fig. 1, predicts a current field or frame from corresponding previous field or frame data. This prediction is based on an estimation of motion between current and previous fields or frames. The motion estimation is determined in terms of two-dimensional motion vectors, representing a displacement of pixels between the current and previous frames. Usually, motion estimation is performed on a block-by-block basis, wherein a block in a current frame is compared with blocks in previous frames until a best match is determined. Based on the comparison result, a displacement vector for each block of a current frame is estimated.

This is accomplished by a motion estimator unit 170, receiving the current input signal and the locally decoded images.

Based on the results of motion estimation, motion compensation performed by motion compensation prediction unit 165 provides a prediction utilizing the determined motion vector. The information contained in a prediction error block, representing the differences between the current and the predicted block, is then transformed into the transform coefficients by transform unit 120. Generally, a two-dimensional Discrete Cosine Transform (DCT) is employed therefore.

In accordance with the H.264 / AVC standard, the input image is divided into macro blocks. The macro blocks are encoded applying an "Intra" or "Inter" encoding mode. In Inter mode, a macro block is predicted by employing motion compensation as previously described. In Intra mode, the prediction signal is set to zero, but the video encoding standard H.264 / AVC additionally employs a prediction scheme based on already encoded macro blocks of the same image in order to predict subsequent macro blocks.

Only Intra-encoded images (I-type images) can be encoded without reference to any previously decoded image. The I-type images provide error resilience for the encoded video sequence. Further, entry points into bit streams of encoded data are provided by the I-type images in order to enable random access, i.e. to access I-type images within the sequence of encoded video images. A switch between Intra-mode, i.e. a processing by Intra-frame prediction unit 160, and Inter-mode, i.e. a processing by motion compensation prediction unit 165, is controlled by Intra/Inter switch 180.

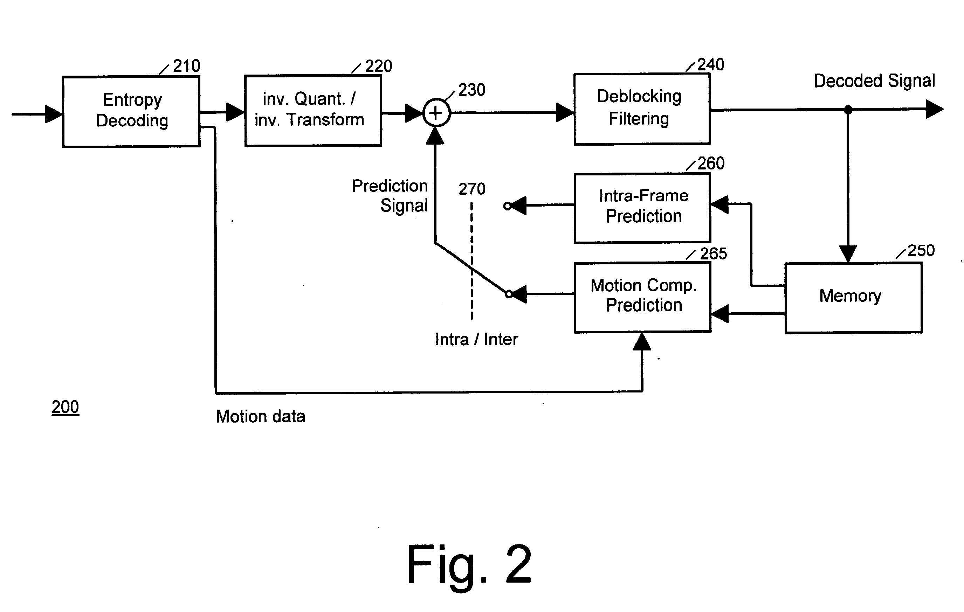

For reconstructing the encoded images at the decoder side, the encoding process is applied in reverse manner. A schematic block diagram, illustrating the configuration of the corresponding decoder generally denoted by reference numeral 200, is shown in Fig. 2. First, the entropy encoding is reversed in entropy decoding unit 210. The entropy decoded coefficients are submitted to an inverse quantizer and inverse transformer 220 and the motion data are submitted to motion compensation prediction unit 270. The quantized coefficient data are subjected to the inverse quantization and inverse transform unit 220. The reconstructed image block containing prediction differences is added by adder 230 to the prediction signal stemming from the motion compensation prediction unit 270 in Inter-mode or stemming from a Intra-frame prediction unit 260 in Intra-mode. The resulting image may be applied to a de-blocking filter 240 and the decoded signal is stored in memory 250 to be applied to prediction units 260, 270.

De-blocking filters 140 and 240 only aim to reduce the de-blocking effects by smoothing the edges of the macro blocks. For example, the de-blocking filter can be realized by a linear filtering of the image data near to the borders on the image blocks. However, such a de-blocking filter does not confirm any further image improvement, for instance, to reduce the quantization noise, or to remove any distortions caused during the encoding / decoding process. Additionally, the described de-blocking filter always uses the same filter coefficients. Thus, it is not possible to consider the content of a current image and to adapt the filter accordingly.

In order to further improve the image quality of the decoded image data, an additional filter may be applied after decoding the image data. For this purpose, the de-blocking filter is either substituted by another filter, or an additional filter is employed after the de-blocking filter. However, when always using the same filter coefficients for filtering the decoded image data, the enhancement of the image quality varies depending on the content of the images. In order to further improve the image quality, the coefficients of the filter may be adapted according to the present image data. Further to this, a conventional filter determines a single set of filter coefficients for the whole image. Hence, such a set of filter coefficients cannot consider spatial dependencies in the image.

When performing an adaptive filtering, conventionally the disturbed image data is analyzed and different filter coefficients are determined, depending on the properties of the image data. For example, the image may be either sharpened or smoothed, depending on the content of the present image data. In a conventional image decoder, the analysis for determining the adaptive filter coefficients is based on the corrupted image data. As this image data includes errors, for instance, quantization noise, it is not possible to determine an optimum set of filter coefficients based in this data.

In order to further improve a set-up of an adaptive filter, and to determine better filter parameters, additional information is used for determining the filter parameters. For example, the uncorrupted image data can be analyzed in order to identify additional information which has been lost during the encoding and successive decoding of the image data.

In order to compensate this data loss, and to enable an improved filtering of the decoded image data, additional a priori information is determined in the image encoder and provided to the decoder. Based on this a priori information, an enhanced set of filter parameters is determined for an adaptive filtering of the decoded image data.

The image data within a complete image may have different properties on different spatial positions. For example, a single image may comprise image elements with a lot of sharp details and, at the same time, image elements with a smooth, flat structure. Thus, different filter parameters will be required in order to obtain an optimal result for the respective areas within an image. When using only a single set of filter coefficients for a complete image, the filter coefficients can be optimised only for either one of the individual, different image areas, or an average set of filter coefficients has to be used for filtering the whole image.

Additionally, when encoding and successfully decoding an image, the image is usually separated into a plurality of individual image areas, for example, macroblocks. When the individual image areas are put together, the pixel values at the borders between the individual areas have to be filtered in order to avoid blocking effects. However, such a filtering is only required at the border of the individual image areas. In contrast, in the middle of an image area, another kind of filtering can be applied in order to enhance sharp details and improve the image quality respectively.

In order to adapt the filtering of the image data within an image depending on the spatial positions of the individual pixels, and to enable an improved filtering of the decoded image data, the individual pixels within an image are separated into a plurality of image element groups, and it is determined for each image element group separately how to obtain an optimal set of filter coefficients. The data for achieving the optimal filter coefficients is determined based on a priori information. The additional a priori information is determined in the image encoder and provided to the decoder. Based on the separate filter data for the individual image element groups, an enhanced set of filter coefficients is determined for an adaptive filtering of the decoded image data of the respective image element groups.

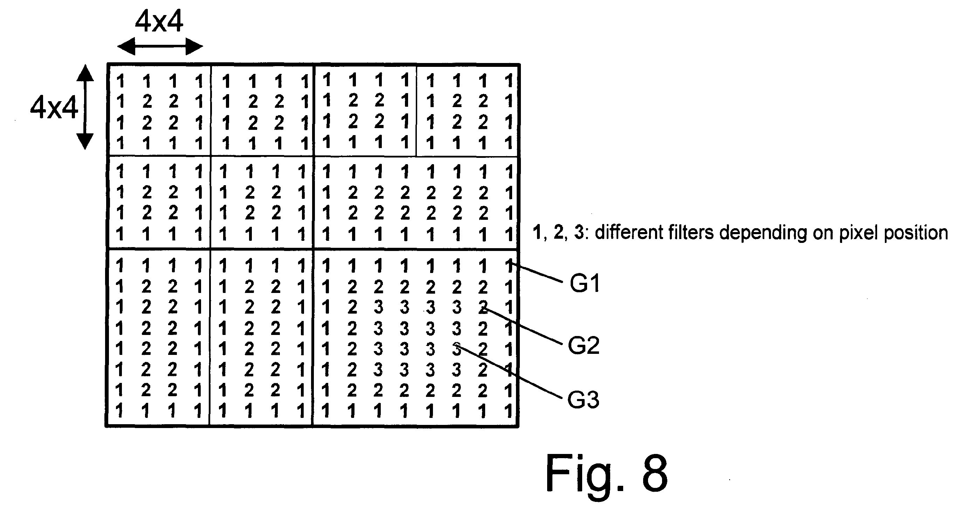

Fig. 8 illustrates an example for assigning the individual image elements to one of a plurality of image element groups. Each image element group is a group of particular image elements, for instance pixels, having a common property or a group of elements which are to be handled in a common manner. In particular, image elements belonging to the same image element group are to be addressed to a same filtering operation. Specifically, separate pixels are considered to be individual image elements. In this example, the individual image elements are assigned to three separate image element groups G1, G2 and G3, indicated by the numerals 1, 2 and 3. In this example the individual image elements are assigned to three separate image element groups. However, any other number of image element groups is possible.

In order to assign the individual image elements to the respective image element groups G1, G2 and G3, different approaches are possible. For example, the individual pixels can be assigned to the respective groups based on a predefined rule. Such a rule can be, for instance, a pre-stored map indicating an assignment of a pixel to a group. If the same assignment is always used for each image, the same map can be pre-stored in the encoder and the decoder, and a quick and easy assignment of the respective pixels can be achieved without transmitting any additional data from the encoder to the decoder. Alternatively, a plurality of different maps indicating an assignment between the pixels and the respective groups can be pre-stored in an encoder and a decoder, and the encoder selects an optimal assignment map based on the current image data. In this case, it is only necessary to indicate the selected map to the decoder. Accordingly, only a small amount of additional data has to be transmitted from the encoder to the decoder.

Alternatively, the assignment of the individual pixels to one of the image element groups G1, G2 and G3 can be determined based on the spatial distance for a particular border. In the example illustrated in Fig. 8, such borders are illustrated by solid lines. All image elements at a border are assigned to image element groups G1. Image elements having a spatial distance of one pixel to the borders are assigned to group G2 and the remaining image elements are assigned to group G3.

A border could be, for example, the outer border of an image or a slice. Otherwise, when the image is separated into a plurality of image areas, for instance blocks or macroblocks, the assignment of a particular pixel to a group can be determined based on the spatial distance of the pixels to the respective border of such an image area. If the assignment of the pixels to the respective groups is known in the decoder, the decoder can apply the same assignment rule without the need for any additional information, and accordingly, no further assignment data has to be transmitted.

In an alternative embodiment, the decoder performs an adaptive assignment of the image elements to the respective image element groups depending on the properties of the image and / or the individual image elements. For example, the current image data is analyzed in order to detect image elements having similar properties and to group the individual image elements based on the result of this analysis. The encoder may detect all pixels relating to an area with sharp details and another area having only a flat image content. Alternatively, the individual image elements may also be grouped depending on detected patterns within an image. Other possibilities for dividing the individual pixels within an image to different groups may also be possible, for instance, the image elements may be grouped depending on the colour, the luminance/chrominance values, or any other features detected in the image.

The assignment of the image elements to the respective groups may be determined for each image separately. In this way, an assignment of a pixel to a particular group can be changed for each new image, and a very precise assignment can be achieved

Alternatively, the same assignment of pixels to a particular group can be maintained for a plurality of successive images. For example, the assignment is only determined once for a sequence for a particular number of successive images, for instance, a complete group of pictures (GOP). It is also possible to maintain the same assignment until a scene change is detected, or for another period of successive images.

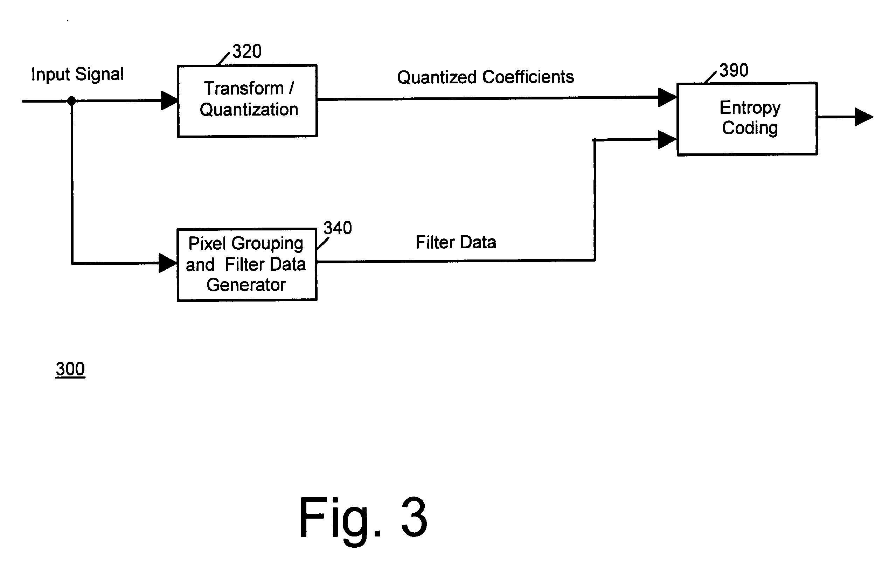

Fig. 3 illustrates an encoder according to a first embodiment of the present invention. The encoder receives image data of a current image, and employs a discrete cosine transform (DCT) and a quantization of the DCT coefficients. The filter data generator 340 analyzes the current image data, separates the individual image pixels within the image into a plurality of groups and generates additional filter data, which can be used for a determination of adaptive filter coefficients. The additional filter data is provided to coding unit 390. The coding unit combines the encoded image data and the corresponding filter data in a single bit stream. In this way, the filter information is transmitted or recorded together with the encoded image data.

Different approaches for determining the additional filter data are possible. For example, the filter data may relate to the contrast, the brightness or particular colour characteristics of the respective group of pixel. It is also possible to compute a characteristic ratio between the high frequency and the low frequency components of the image data, or to analyze the statistical characteristic, for instance, standard deviation of the pixel values. An information can be generated, indicating whether the current group of image elements contains sharp details or relates to flat image data.

It is also possible to analyze the activity in the current image element group. For example, the filter data may describe a degree or a frequency of changes in the image data. It is also possible to indicate when a scene change occurs.

It is also possible to analyze the structure of the image data, or to determine particular patterns, or other characteristics of the image data. The filter data may include the determined information either directly or as parameters of a particular model describing the properties of the image data. Any other information for enabling an enhanced set-up of an adaptive filter may be possible.

When determining the adaptive filter data for the individual groups of image elements, different approaches are possible. For example, a new set of filter data for each group of image elements can be determined for each individual image, and each time a new image is to be encoded, new filter data are determined for each image element group. Alternatively, a single set of filter data may be calculated for a plurality of images. For instance, each set of filter data may be valid for a sequence of successive images, like a group of pictures (GOP), or a complete scene. When predicatively encoding the image data, it may be also possible to determine separate filter data depending on the coding mode (I, P, or B-picture). Any other rule for combining a plurality of images having the same filter data may be possible.

Otherwise, an image may divided into separate image areas, for example, the image may be separated into individual blocks or macroblocks. In this case, it is also possible to determine a separate set of filter data for each image area. Additionally, a plurality of image areas can be grouped together and a single set of filter data is determined for each group of image areas. For example, all image blocks belonging to a same slice of an image could be combined, and a common set of filter data is calculated for the each of the image element groups within such a slice.

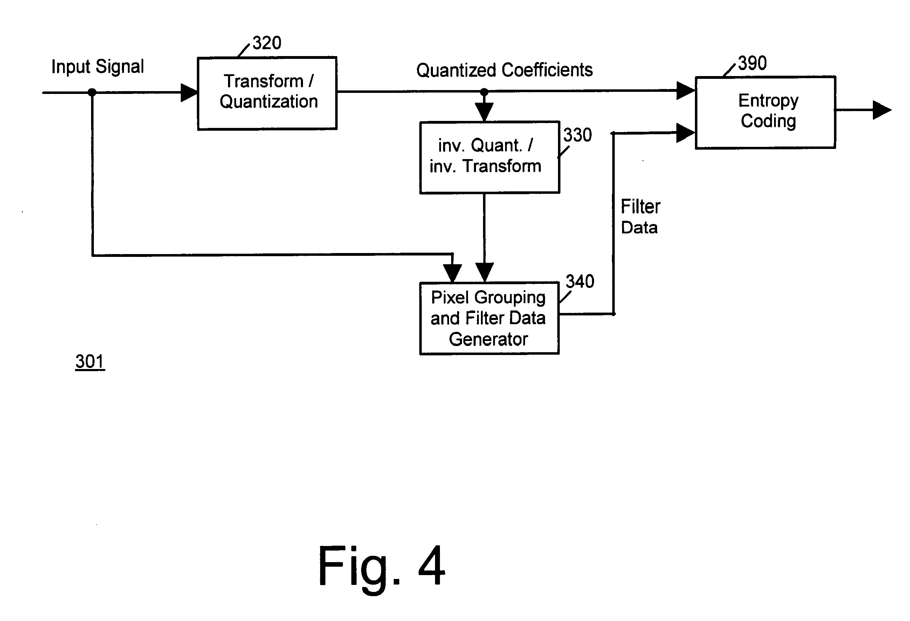

Further to this filter data generation for the individual groups of pixels, which is only based on the undisturbed input signal, it is also possible to compare the undisturbed input signal and the resulting image after decoding the encoded image data. For this purpose, an additional decoding unit 330 is included in the image encoder, as illustrated in Fig. 4. The image decoding unit 330 performs an inverse quantization and an inverse cosine transform of the encoded image data. Filter data generator 340 compares undisturbed image data of a particular group if image elements and decoded image data of the respective image element group. In this way, the filter data may include information on how to adapt the adaptive image filter in order to minimize the quantization noise, or to compensate other errors of the encoded image data.

For example, filter data generator 340 calculates a cross-correlation between the undisturbed image data relating to a group of image elements and the corresponding decoded image data. The values of this cross-correlation function are inserted in the corresponding encoded image data. Any other information relating to the differences between undisturbed and disturbed image data is possible.

If the assignment of the individual image elements to the respective groups is not pre-stored in the decoder, an encoder has to provide the current assignment with the decoder. For this purpose, additional data indicating the assignment has to be added to the encoded image data. Such an indication may be, for example, a selection of a particular, pre-stored assignment map. Alternatively, a indication for selecting a particular rule for assigning the particular image elements to a particular group may be transmitted.

Alternatively, the encoder creates a particular map indicating for each pixel an assignment to a particular group. This map may indicate the assignment of each pixel within an image to a particular image element group. Alternatively, the map may only indicate the assignment for an image area, for instance, a block, The map is added to the encoded image data. A decoder receives the map and can perform the same assignment of the image elements as determined in the encoder.

In order to provide the filter data and/or the assignment of the image elements to the respective groups together with the encoded image data, a single bit stream is generated. For this purpose, the additional data can be inserted into the header of an encoded image data sequence.

Alternatively, the additional data can be inserted into the encoded data as a additional data unit separate to the encoded image data. For example, the image data can be conventionally encoded and transmitted for an encoder to a decoder. For this purpose the encoded image data may be separated into separate packets and the individual packets are transmitted. In order to provide a decoder with the additional data indicating the filter data and the assignment of the image elements to the image element groups, additional data is generated and inserted in-between the data packets of the encoded image data. As the encoded image data packets are still available in a conventional data format, a decoder can decode the image data even though the decoder cannot handle the additional filter data. In this case the decoder discards the additional data units between the image data and performs a conventional image data decoding.

The addition information may be transmitted in an Supplemental Enhancement Information message (SEI-message) for H.264/AVC. A SEI message assists in processes related to decoding, display, post-processing or other purposes. However, SEI messages are not required for constructing the luminance / chrominance samples by the decoding process. Decoders conforming to the H.264/AVC standard are not required to process this information. When present in the bit stream, SEI messages shall obey their standardised syntax and semantics. In this SEI-message, the filter data and/or the image element assignment is included as additional data fields. In this way, a conventional decoder is reading the encoded image data and the SEI-message. If the decoder cannot handle the additional data, the decoder may skip the corresponding data and decode the image data in a conventional manner. Otherwise, if the decoder is adapted to perform a filtering by means of transmitted data, the decoder may extract the filter data/image element assignment and determine the filter parameter accordingly.

Image data of a color image may include separate image data for each color component. For example, the image data of red (R), green (G), and blue (B) image data may be encoded separately. Alternatively, the image data may included separate data elements for luminance (Y) and chrominance (Cr, Cb). Any other separation of the image data into separate components is possible. In order to obtain an optimized set of filter data, the filter data can be determined separately for the image data of each color component. Accordingly, a separate assignment of image elements for the individual components may be possible.

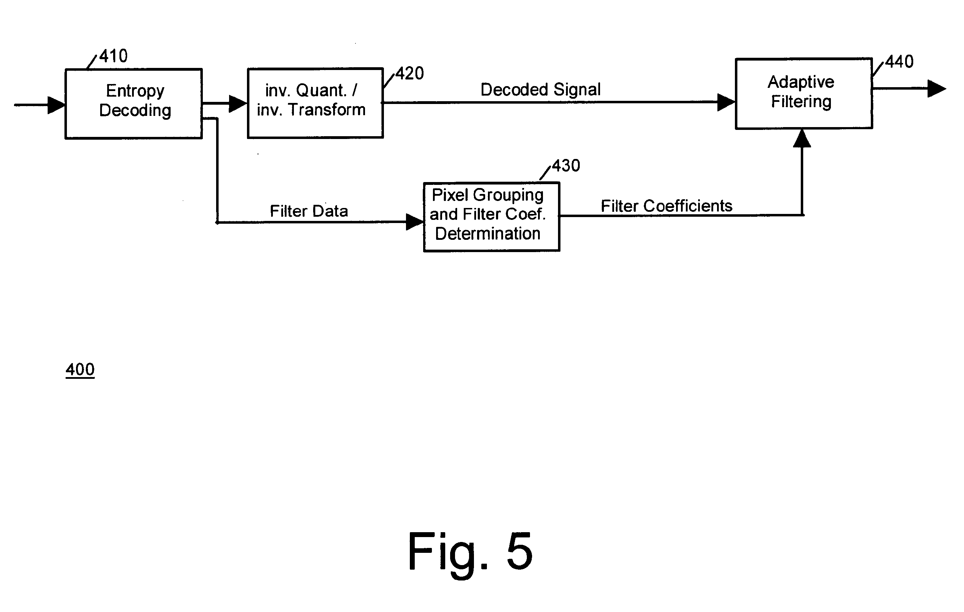

Fig. 5 illustrates an image decoder for decoding encoded image data according to the present invention. Decoder 410 extracts the filter data from the encoded image data and provides the extracted data to filter coefficient determination unit 430. The individual image elements of the current image are assigned to the image element groups. For this purpose, either a known, predetermined rule is applied, or the assignment is performed based on additional data included in the encoded image data.

Based on the extracted additional filter information, adapted filter coefficients are determined for each group of image elements and the determined coefficients are provided to filter 440. The decoded image data of each group is filtered based on the determined filter coefficients.

In order to simplify the determination of the particular filter coefficients, the respective coefficients for all image element groups are already determined in the encoder and the explicit filter coefficient values are inserted into the encoded image data as filter data. In this way, the filter coefficients have to be computed only once, and each decoder can set up its filter easily without a separate filter coefficient computation in each decoder.

Alternatively, only a basis information for determining filter coefficients may be inserted into the image data as filter data, and each decoder determines an adapted set of filter parameters separately. In this way, it is possible to consider the individual computational resources of the decoders. On the one hand side, a decoder of a mobile device, comprising only a slow processor and a small display panel, may perform a filter operation using only a small number of filter coefficients. On the other hand side, a high-end decoder for outputting image data on a large display may include a fast and powerful filter processor. Thus, such a decoder determines more filter coefficients and applies a more complex filter operation. Even different filter operations in the same image decoder may be possible. For example, a decoder may provide a power-saving mode, wherein only a small number of filter coefficients is determined and a power-consuming high quality mode, wherein more filter parameters are determined and applied to the decoded image data.

When an image decoder extracts the additional filter data, different methods for determining the filter parameters are possible. For example, a decoder may store a plurality of predetermined sets of filter coefficients. Based on the obtained filter data, one set of predetermined filter parameters is selected and provided to the filter. For example, when the filter data indicates a flat image, a filter coefficient is selected for smoothing the decoded image data. Otherwise, when it is indicated in the filter data that the image includes fine details, a set of filter coefficients for sharpening the image may be selected.

Other classes of filter parameters are also possible. For example, a set of filter parameters can be selected depending on the activity in the image, the statistical characteristics, the ratio between high frequency and low frequency components or any other classification. It is also possible to apply different filter coefficients depending on the genre of the present image sequence. For example, different filter coefficients can be applied to a sports sequence, to news and documentation or a music clip.

Alternatively, it is also possible to compute the filter coefficients based on the extracted filter data. For example, the values of the filter coefficients may be calculated based on the ratio between high frequency and low frequency components, the contrast, the brightness, the statistical characteristics of the current image data, or any other values included in the additional filter data.

When the filter data relates to a comparison between the undisturbed image data and the corresponding decoded image data, which has been carried out in the encoder, the filter coefficients can be determined in order to minimize the difference between uncorrupted and the corresponding decoded image data. For this purpose, the filter data information may give a hint how to minimize the difference between the decoded and undisturbed image data. For example, a cross-correlation between the undisturbed image data and the corresponding decoded image data, which has been calculated in the encoder, can be used as a basis for calculating the filter coefficients in the decoder. For example, an adaptive Wiener filtering can be implemented when the cross-correlation between uncorrupted and decoded image data is transmitted as additional filter data. Other information for describing the difference between the corrupted and the uncorrupted image data is possible. It is also possible to employ another filter for filtering the decoded image data.

The class of Wiener filter comprises all linear optimum time-discrete filters. The goal of the Wiener filter is to filter out noise having a statistical character. In the case of video coding the quantization noise is considered as a noise that is added to the original video signal. Wiener filters are designed to minimize a mean-square error between the output of the filter and a desired uncorrupted signal.

In order to determine a set of M filter parameters w for a Wiener filter, an MxM auto-correlation matrix R of the corrupted image data and a Mx1 cross-correlation vector p between the corrupted and the original image data has to be computed. With these computational results, the filter coefficients are determined to:

$$w = R^{-1} \times p;$$

wherein $R^{-1}$ denotes the inversion of the auto-correlation matrix R.

Based on the filter parameters w, the filtered data is obtained by a convolution of the disturbed data with the filter coefficients.

For example, a two dimensional 3x3 tap-filter requires nine filter coefficients:

$$w = \begin{pmatrix} w_{11} & w_{12} & w_{13} \\ w_{21} & w_{22} & w_{23} \\ w_{31} & w_{32} & w_{33} \end{pmatrix}.$$

In order to determine these filter coefficients, a 9x9 element auto-correlation matrix and a 9x1 cross-correlation vector are required.

$$R = \begin{pmatrix} R_{11} & \cdots & R_{19} \\ \vdots & \ddots & \vdots \\ R_{91} & \cdots & R_{99} \end{pmatrix} ; \quad p = \begin{pmatrix} p_1 \\ \vdots \\ p_9 \end{pmatrix}.$$

As only the decoded image data is necessary for computing the auto-correlation matrix, this matrix can be generated directly by the decoder. However, the cross-correlation vector requires the knowledge of the uncorrupted image data and the corresponding corrupted data. Thus, this vector can only be determined by the encoder.

For instance, an exemplary cross correlation vector could be computed to:

$$p = \begin{pmatrix} 15231 & 15403 & 15232 & 15367 & 15548 & 15367 & 15230 & 15401 & 15229 \end{pmatrix}.$$

The values of this cross correlation vector are inserted in the encoded image data as filter data. In the decoder, the auto correlation function can be computed. Based on the computed auto correlation and the received cross correlation valued, a 2-dimensional 3x3 filter matrix can be calculated to:

$$w_{3x3} = \begin{pmatrix} -0.03495 & 0.05748 & -0.02351 \\ 0.05896 & 0.88896 & 0.05978 \\ -0.02719 & 0.06011 & -0.03945 \end{pmatrix}.$$

In order to obtain a filtered image value, the corrupted pixel value 229 and its neighboring pixel values are applied to the filter according to the following formula:

$$s_{filtered} = \begin{pmatrix} 192 & 225 & 255 \\ 146 & 229 & 255 \\ 132 & 198 & 252 \end{pmatrix} \cdot w = 227.47.$$

Thus, a value of 227.47 is obtained which is clipped to the pixel value 227. In that case, the decoded and filtered pixel value of 227 is the same as the original pixel value of 227.

In this example, a two dimensional 3x3 tap-filter is described. However, any other size or dimension of a filter may be possible. For example, the filter may also be employed as one dimensional filter. Any number of filter coefficients is possible. For instance, a 7x7 tap-filter may be also used. By increasing the number of filter coefficients, the accuracy of the filter is improved. Each decoder is determining the filter parameters individually. Hence a different filtering of the image data is possible depending on the resourced and requirements of the decoders.

In the above-described examples, the adaptive filter is employed as an additional post-filter. The adaptive filtering is applied to all decoded image data. However, it is also possible to apply the adaptive filtering only to particular images. For example, the filter data may also include an indication whether or not an adaptive filtering should be applied to the current image data. In an image system providing a plurality of coding modes, it is also possible to apply a different filtering depending on the current coding mode.

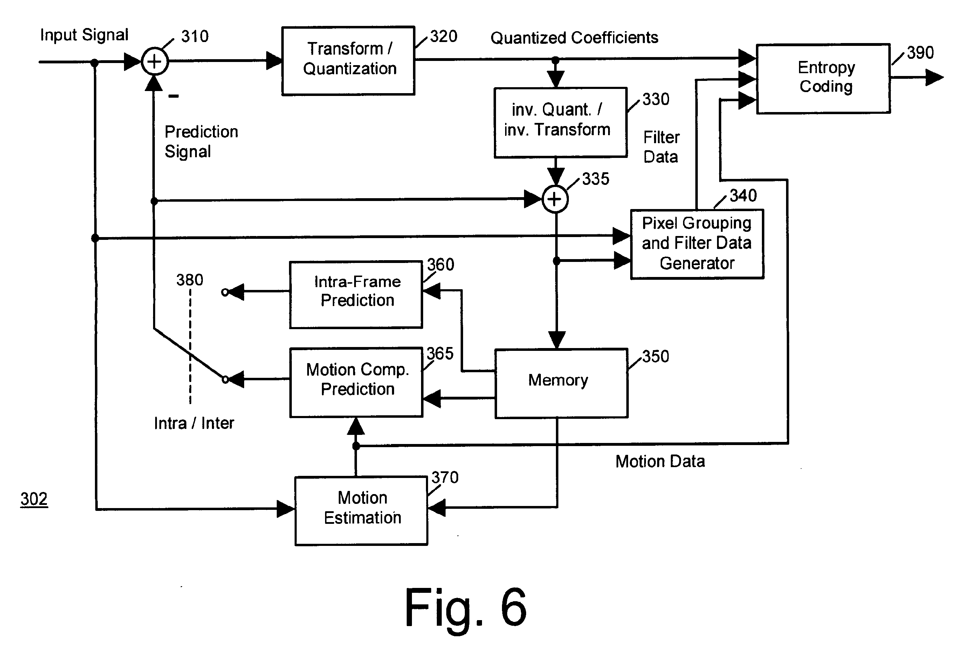

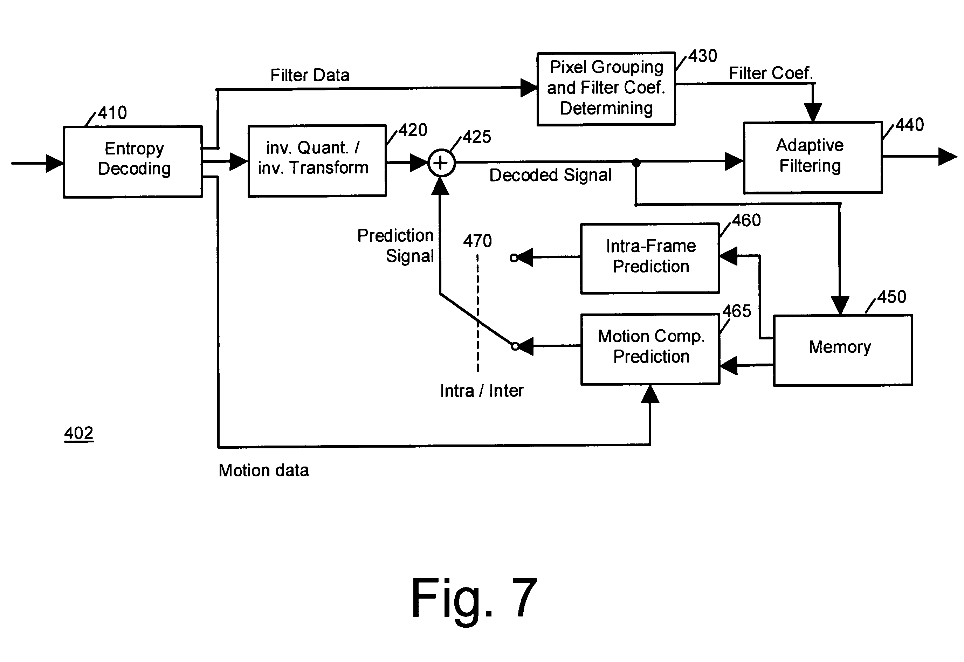

For example, the above-described system may be included in a predictive image encoding / decoding system, as illustrates in Figs. 6 and 7. In this case, the filtering may be applied only to, for instance, intra-coded images. Alternatively, different filter data may be generated and transmitted for intra-coded and inter-coded image data.

Fig. 6 illustrates an image encoder 302 employing a Differential Pulse Code Modulation (DPCM) approach for transmitting only the differences between subsequent images. As this image encoder already includes a decoding unit 330, the output of this decoded may be used to determine the filter data based on a comparison of original image data and decoded image data.

Fig. 7 illustrates a corresponding image decoder 402 for decoding and filtering image data in accordance with the encoder of Fig. 6. The decoder 410 extracts the filter data from the encoded image data. Based on extracted filter data, the filter coefficients are determined and provided to the adaptive filter 440. The decoded image data is obtained by using previously decoded image data and a predictive image decoding approach. The decoded image data is filtered and the filtered image data is output.

Summarizing, it is the particular approach of the present invention to determine different additional a priori information for setting up an image filter depending on the spatial position of an image element within an image. The individual image elements of an image are assigned to one of a plurality of groups and an image filter is set up separately for each group of pixels based on additional a priori information. As the original image data is not available in a decoder, a conventional decoder can only use decoded image data for determining adaptive filter coefficients. However, this decoded image data includes disturbances, such as quantisation noise. The present invention generates additional data for improving the filter efficiency based on undisturbed image data. This additional data for setting up an image filter is determined depending on the spatial position of the pixels within an image. An image is separated into a plurality of groups and separate filter data is determined for each group. The decoder analyses the filter information and determines an adaptive set of filter coefficients for each group of image elements separately. Based on a determined filter coefficient, an adaptive filtering of the decoded image data is performed depending on the spatial positions of the individual image elements. In this way, the decoder applies an improved filtering.

**Claims**

1. An image encoder for encoding a sequence of images, comprising:

an image encoding unit (320) for encoding image data, said image data including a plurality of image elements; and
a filter data generator (340) for determining filter data to be inserted into the encoded image data based on the image data to be encoded;

**characterized in that**
said filter data generator (340) generates said filter data separately for a plurality of image element groups (G1, G2, G3).

2. An image encoder according to claim 1, further comprising
a decoding unit (330) for decoding encoded image data;
wherein said filter data generator (340) determining the filter data of an image element group (G1, G2, G3) based on the image data to be encoded and the corresponding decoded image data.

3. An image encoder according to claim 2, wherein said filter data generator (340) calculating a cross-correlation function between the image data to be encoded and the corresponding decoded image data of an image element group (G1, G2, G3).

4. An image encoder according to any of claims 1 to 3, wherein said image elements are assigned to the plurality of image element groups (G1, G2, G3) based on a predetermined rule.

5. An image encoder according to any of claims 1 to 4, wherein the image data of each image is divided into a plurality of blocks which are individually encoded, and said image elements are assigned to the plurality of image element groups (G1, G2, G3) depending on a spatial position of the image element within a block.

6. An image encoder according to claim 5, wherein a same rule for assigning an image element to an image element group (G1, G2, G3) depending on the spatial position of the image element within the block is applied for all blocks of an image.

7. An image encoder according to any of claims 1 to 3, wherein said image elements are assigned to the plurality of image element groups (G1, G2, G3) based on an adaptive assignment rule.

8. An image encoder according to claim 7, wherein said a separate assignment rule is determined for each image.

9. An image encoder according to claim 7, wherein a same assignment rule is applied for a plurality of successive images.

10. An image encoder according to any of claims 1 to 9, wherein an indication of the assignment of the image elements to the individual image element groups (G1, G2, G3) is inserted into the encoded data.

11. An image encoder according to claim 10, wherein the indication of the assignment of the image elements to the individual image element groups (G1, G2, G3) is inserted into the encoded data as an information unit separate from the image data.

12. An image encoder according to any of claims 1 to 11, wherein the filter data is inserted into the encoded data as an information unit separate from the image data.

13. An image encoder according to claim 11 or 12, wherein the separate information unit is a Supplemental Enhancement Information message.

14. An image decoder for decoding a sequence of images, comprising:

a decoding unit (420) for decoding encoded image data, said decoded image data including a plurality of image elements;
a filter data extracting unit (410) for extracting filter data from said encoded image data; and
a filter (440) for filtering the decoded image data based on the extracted filter data

**characterized in that**

said filter (440) filtering the decoded image data separately for a plurality of image element groups (G1, G2, G3).

**15.** An image decoder according to claim 14, further comprising a filter coefficient determining unit (430) for determining a filter coefficient based on the extracted filter data.

**16.** An image decoder according to claim 15, wherein the extracted filter data includes a cross-correlation between the decoded image data and the corresponding uncorrupted image data an image element group, said filter coefficient determining unit (430) calculating an auto-correlation function of the decoded image data of the image element group (G1, G2, G3), and determining a filter coefficient based on the extracted cross-correlation and the computed auto-correlation.

**17.** An image decoder according to any of claims 14 to 16, wherein said image elements are assigned to the plurality of image element groups (G1, G2, G3) based on a predetermined rule.

**18.** An image decoder according to any of claims 14 to 17, wherein the image data of each image is divided into a plurality of blocks which are individually encoded, and said image elements are assigned to the plurality of image element groups (G1, G2, G3) depending on a spatial position of the image element within a block.

**19.** An image decoder according to claim 18, wherein a same rule for assigning an image element to an image element group (G1, G2, G3) depending on the spatial position of the image element within the block is applied for all blocks of an image.

**20.** An image decoder according to any of claims 14 to 16, wherein said image elements are assigned to the plurality of image element groups (G1, G2, G3) based on an adaptive assignment rule.

**21.** An image decoder according to any of claims 14 to 20, wherein an indication of the assignment of the image elements to the image element groups (G1, G2, G3) is extracted from the encoded image data.

**22.** An image decoder according to claim 21, wherein said indication of the assignment of the image elements to the image element groups (G1, G2, G3) is extracted.

**23.** An image decoder according to any of claims 14 to 22, wherein said filter data extraction unit (410) extracting the filter data from an information unit separate from the encoded image data.

**24.** An image decoder according to claim 22 or 23, wherein the separate information unit is a Supplemental Enhancement Information message.

**25.** An image encoding and decoding system including an encoder (300) according to any of claims 1 to 13 and a decoder (400) according to any of claims 14 to 24.

**26.** An image encoding method for encoding a sequence of images, comprising the steps of:

   encoding image data, said image data including a plurality of image elements; and
   determining filter data to be inserted into the encoded image data based on the image data to be encoded;

   **characterized in that**
   said step for determining filter data generates said filter data separately for a plurality of image element groups (G1, G2, G3).

**27.** An image encoding method according to claim 26, further comprising
   a decoding step for decoding encoded image data;
   wherein said step for determining filter data determining the filter data of an image element group (G1, G2, G3) based on the image data to be encoded and the corresponding decoded image data.

**28.** An image encoding method according to claim 27, wherein said step for determining filter data calculating a cross-correlation function between the image data to be encoded and the corresponding decoded image data of an image element group (G1, G2, G3).

**29.** An image encoding method according to any of claims 26 to 28, further comprising a step of assigning said image elements to the plurality of image element groups (G1, G2, G3) based on a predetermined rule.

**30.** An image encoding method according to any of claims 26 to 29, further dividing the image data of each image into a plurality of blocks which are individually encoded, and assigning said image elements to the plurality of image element groups (G1, G2, G3) depending on a spatial position of the image element within a block.

**31.** An image encoding method according to claim 30, wherein a same rule for assigning an image element to an image element group (G1, G2, G3) depending on the spatial position of the image element within the block is applied for all blocks of an image.

**32.** An image encoding method according to any of claims 26 to 28, further assigning said image elements to the plurality of image element groups (G1, G2, G3) based on an adaptive assignment rule.

**33.** An image encoding method according to claim 32, wherein said a separate assignment rule is determined for each image.

**34.** An image encoding method according to claim 32, wherein a same assignment rule is applied for a plurality of successive images.

**35.** An image encoding method according to any of claims 26 to 34, further inserting an indication of the assignment of the image elements to the individual image element groups (G1, G2, G3) into the encoded image data.

**36.** An image encoding method according to claim 35, wherein the indication of the assignment of the image elements to the individual image element groups (G1, G2, G3) is inserted into the encoded data as an information unit separate from the image data.

**37.** An image encoding method according to any of claims 26 to 36, wherein the filter data is inserted into encoded data as an information unit separate from the image data.

**38.** An image encoding method according to claim 36 or 37, wherein the separate information unit is a Supplemental Enhancement information message.

**39.** An image decoding method for decoding a sequence of images, comprising the steps of:

decoding encoded image data, said decoded image data including a plurality of image elements;
extracting filter data from said encoded image data; and
filtering the decoded image data based on the extracted filter data

**characterized in that**
said filtering step filtering the decoded image data separately for a plurality of image element groups (G1, G2, G3).

**40.** An image decoding method according to claim 39, further comprising a filter coefficient determining step for determining a filter coefficient based on the extracted filter data.

**41.** An image decoding method according to claim 40, wherein the extracted filter data includes a cross-correlation between the decoded image data and the corresponding uncorrupted image data an image element group, said filter coefficient determining step calculating an auto-correlation function of the decoded image data of the image element group (G1, G2, G3), and determining a filter coefficient based on the extracted cross-correlation and the computed auto-correlation.

**42.** An image decoding method according to any of claims 39 to 41, further assigning said image elements to the plurality of image element groups (G1, G2, G3) based on a predetermined rule.

**43.** An image decoding method according to any of claims 39 to 42, further dividing the image data of each image into a plurality of blocks which are individually encoded, and assigning said image elements to the plurality of image element groups (G1, G2, G3) depending on a spatial position of the image element within a block.

**44.** An image decoding method according to claim 43, wherein a same rule for assigning an image element to an image element group (G1, G2, G3) depending on the spatial position of the image element within the block is applied for all blocks of an image.

**45.** An image decoding method according to any of claims 39 to 41, further assigning said image elements to the plurality of image element groups (G1, G2, G3) based on an adaptive assignment rule.

**46.** An image decoding method according to any of claims 39 to 45, further extracting an indication of the assignment of the image elements to the image element groups (G1, G2, G3) from the encoded image data.

**47.** An image decoding method according to claim 46, wherein said indication of the assignment of the image elements to the image element groups (G1, G2, G3) is extracted.

**48.** An image decoding method according to any of claims 39 to 47, wherein said step for extracting filter data extracting the filter data from an information unit separate from the encoded image data.

**49.** An image decoder according to claim 47 or 48, wherein the separate information unit is a Supplemental Enhancement Information message.

**50.** An image encoding and decoding method including the encoding steps of any of claims 26 to 38 and the decoding steps of any of claims 39 to 49.

Fig. 1

EP 1 944 974 A1

Fig. 2

EP 1 944 974 A1

Fig. 3

Fig. 4

Fig. 5

EP 1 944 974 A1

Fig. 6

Fig. 7

4x4

4x4

1, 2, 3: different filters depending on pixel position

G1

G2

G3

# Fig. 8

**EP 1 944 974 A1**

**European Patent Office**

**EUROPEAN SEARCH REPORT**

Application Number

EP 07 00 0368

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 909 745 B1 (PURI ATUL [US] ET AL) 21 June 2005 (2005-06-21) | 1-4, 7-14,25, 26,39,50 | INV. H04N7/26 |
| Y | * abstract * * column 7, line 48 - column 8, line 47 * * table 1 * * figure 8 * * column 15, lines 25-40 * * column 16, lines 45-52 * ----- | 5,6 | |
| Y | ATZORI L ET AL: "Low-complexity post-processing for artifact reduction in block-DCT based video coding" IMAGE PROCESSING, 2000. PROCEEDINGS. 2000 INTERNATIONAL CONFERENCE ON SEPTEMBER 10-13, 2000, PISCATAWAY, NJ, USA,IEEE, 10 September 2000 (2000-09-10), pages 668-671, XP010530073 ISBN: 0-7803-6297-7 | 5,6 | |
| A | * the whole document * ----- | 1-50 | TECHNICAL FIELDS SEARCHED (IPC) H04N |
| X | EP 0 786 904 A2 (LUCENT TECHNOLOGIES INC [US]; SHARP KK [JP]) 30 July 1997 (1997-07-30) * abstract * * column 3, line 27 - column 4, line 28 * * figures 3,4 * ----- | 1-13, 24-26, 39,50 | |
| X | EP 1 513 349 A (MICROSOFT CORP [US]) 9 March 2005 (2005-03-09) * paragraphs [0072], [0073] * * paragraphs [0079] - [0085] * * figure 7 * ----- -/-- | 1-13, 24-26, 39,50 | |

The present search report has been drawn up for all claims

| Place of search | Date of completion of the search | Examiner |
|---|---|---|
| Munich | 10 July 2007 | Lindgren, Johan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

23

**European Patent Office**

## EUROPEAN SEARCH REPORT

Application Number

EP 07 00 0368

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | HAO-SONG KONG ET AL: "Edge map guided adaptive post-filter for blocking and ringing artifacts removal" CIRCUITS AND SYSTEMS, 2004. ISCAS '04. PROCEEDINGS OF THE 2004 INTERNATIONAL SYMPOSIUM ON VANCOUVER, BC, CANADA 23-26 MAY 2004, PISCATAWAY, NJ, USA,IEEE, US, 23 May 2004 (2004-05-23), pages III-929, XP010719412 ISBN: 0-7803-8251-X * the whole document * ----- | 1-50 | |

TECHNICAL FIELDS
SEARCHED     (IPC)

The present search report has been drawn up for all claims

| Place of search | Date of completion of the search | Examiner |
|---|---|---|
| Munich | 10 July 2007 | Lindgren, Johan |

## ANNEX TO THE EUROPEAN SEARCH REPORT
## ON EUROPEAN PATENT APPLICATION NO.

EP 07 00 0368

This annex lists the patent family members relating to the patent documents cited in the above-mentioned European search report.
The members are as contained in the European Patent Office EDP file on
The European Patent Office is in no way liable for these particulars which are merely given for the purpose of information.

10-07-2007

| Patent document cited in search report | | Publication date | Patent family member(s) | | Publication date |
|---|---|---|---|---|---|
| US 6909745 | B1 | 21-06-2005 | NONE | | |
| EP 0786904 | A2 | 30-07-1997 | DE | 69711736 D1 | 16-05-2002 |
| | | | DE | 69711736 T2 | 10-10-2002 |
| | | | JP | 3316157 B2 | 19-08-2002 |
| | | | JP | 9215009 A | 15-08-1997 |
| | | | US | 6324301 B1 | 27-11-2001 |
| EP 1513349 | A | 09-03-2005 | CN | 1627824 A | 15-06-2005 |
| | | | JP | 2005086830 A | 31-03-2005 |
| | | | KR | 20050025928 A | 14-03-2005 |
| | | | US | 2005053288 A1 | 10-03-2005 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20050105627 A, Z. Sun